# DEMANDE DE BREVET EUROPEEN

(11) **EP 1 306 477 A1**
(43) Date de publication de la demande: **02.05.2003**
(21) Numéro de dépôt: 02292557.2
(22) Date de dépôt: 16.10.2002
(51) Int. Cl.: D05C 17/02, B60N 3/04

(54) **Flan thermoformable à bandes de touffes differenciées**

(30) Priorité: 26.10.2001 FR 0113894
(71) Demandeur: Centre d'Etude et de Recherche pour l'Automobile ( CERA), 51100 Reims (FR)
(72) Inventeur: Mervaille, Dominique, 51430 Tinqueux (FR); Luillier, Laurence, 51100 Reims (FR); Cagneaux. Frédéric, 02680 Fontaine Les Clercs (FR)
(74) Mandataire: Geismar, Thierry

(57) **Abrégé**

L'invention concerne un flan thermoformable (10) du type comprenant, associées l'une sur l'autre, une nappe textile tuftée (1) et une couche de matériau thermoformable (9), la surface libre (4) de la nappe textile tuftée comprenant des bandes (7) de touffes (3) de masse surfacique différente.

L'invention concerne également un procédé de réalisation d'un tel flan thermoformable (10) ainsi qu'un tapis notamment pour véhicule automobile comprenant un tel flan (10) thermoformé.

## Description

L'invention concerne un flan thermoformable comprenant une nappe textile tuftée, un procédé de réalisation d'un tel flan, ainsi qu'un tapis notamment pour habitacle de véhicule automobile comprenant un tel flan thermoformé.

La technique de tuftage ou touffetage, qui consiste en la formation de touffes sur la surface d'une nappe textile, est particulièrement adaptée pour la réalisation de tapis d'habitacles de véhicule automobile. En effet, la présence de touffes donne un aspect avantageux au tapis, et ce à moindre coût.

Une nappe textile tuftée utilisée pour la réalisation de tapis d'habitacles de véhicules automobiles subit, lors de sa mise en forme par thermoformage, des étirements plus ou moins importants selon le relief des zones de l'habitacle sur lesquelles elle doit être disposée.

Or, lorsque les zones étirées du tapis sont visibles, l'étirement important de la nappe textile tuftée conduit à un aspect visuel peu satisfaisant, dû à la présence d'une masse surfacique de touffes trop faible. Cet effet indésirable est observé par exemple pour la zone destinée à recouvrir le « tunnel », c'est-à-dire la partie centrale du plancher recevant les organes de transmission du véhicule.

Pour améliorer l'aspect visuel des zones les plus étirées, on connaît déjà des tapis comprenant une nappe textile tuftée dont la totalité de la surface comprend une masse surfacique élevée de touffes.

Cependant, dans ce type de tapis, les zones peu étirées et/ou non visibles comprennent, sans que cela soit nécessaire, une masse surfacique élevée de touffes, ce qui induit un surcoût ainsi qu'une augmentation inutile de poids du tapis.

Pour remédier à ces inconvénients, l'invention propose un flan thermoformable comprenant une nappe textile tuftée pourvue d'une masse surfacique de touffes qui est variable, et ce en fonction notamment du degré d'étirement que les différentes zones de la nappe recevant les touffes ont à subir lors d'un thermoformage ultérieur.

En particulier, la nappe est réalisée de sorte que les zones destinées à être visibles en étant fortement étirées soient pourvues d'une masse surfacique de touffes importante, et que les zones destinées à être peu étirées et/ou non visibles soient pourvues d'une masse surfacique de touffes moindre.

En outre le procédé de réalisation du flan présente l'avantage d'être simple à mettre en oeuvre, car il permet l'utilisation de machines à tufter classiques, et ne nécessite pas de réglages complexes desdites machines.

A cet effet, et selon un premier aspect, l'invention propose un flan thermoformable du type comprenant, associées l'une sur l'autre, une nappe textile tuftée et une couche de matériau thermoformable, la surface libre de la nappe textile tuftée comprenant des bandes de touffes de masse surfacique différente.

Selon un deuxième aspect, l'invention propose un procédé de réalisation d'un tel flan thermoformable, ledit procédé comprenant les étapes prévoyant de :
- former la nappe textile ;
- faire défiler la nappe sous au moins un banc d'aiguilles d'une machine à tufter, chaque aiguille étant alimentée par au moins un fil de sorte à former, sur la surface libre de la nappe, des rangées de touffes qui s'étendent perpendiculairement au sens de défilement de la nappe, les aiguilles étant alimentées avec des fils de titre différent en fonction de la position sur la nappe des touffes formées, de sorte à obtenir, dans le sens de défilement de la nappe, les bandes de touffes de masse surfacique différente ;
- enduire la surface de la nappe dépourvue de touffes avec une couche de liant ;
- associer la couche thermoformable et la nappe textile tuftée.

Selon un troisième aspect, l'invention propose un tapis d'habitacle de véhicule automobile comprenant un tel flan thermoformable, ledit flan ayant été thermoformé.

D'autres objets et avantages de l'invention apparaîtront au cours de la description qui suit, faite en référence aux dessins annexés dans lesquels :
- la figure 1 est une vue partielle d'une nappe textile tuftée montrant des touffes obtenues partuftage ;
- la figure 2 est un schéma montrant partiellement la surface d'une nappe textile tuftée qui est pourvue de trois bandes de touffes, la bande centrale présentant une masse surfacique de touffes plus importante que les deux bandes latérales ;
- la figure 3 est un schéma montrant la disposition des différentes couches formant un tapis d'habitacle de véhicule automobile selon l'invention, ledit tapis comprenant successivement une nappe textile tuftée, une couche de liant, une couche de matériau thermoformable et un support ;
- la figure 4 est une vue schématique de dessus d'un premier mode de disposition d'un tapis sur le plancher d'un habitacle de véhicule automobile, ledit tapis comprenant une nappe textile tuftée telle que schématisée sur la figure 2 ; et
- la figure 5 est une vue schématique de dessus d'un deuxième mode de disposition d'un tapis sur le plancher d'un habitacle de véhicule automobile, ledit tapis comprenant une nappe textile tuftée telle que schématisée sur la figure 2.

L'invention concerne un flan thermoformable 10 du type comprenant, associées l'une sur l'autre par tous moyens adéquats, une nappe textile tuftée 1 et une couche de matériau thermoformable 9.

Suivant une réalisation, la couche de matériau thermoformable 9 est formée d'un polymère thermoplastique. Ce polymère peut être du type EPDM (éthylène/propylène/diène monomère), ou PVC.

Le matériau thermoformable peut en outre être chargé avec une charge minérale telle que du sulfate de baryum, du carbonate de calcium et/ou de l'hydroxyde de baryum.

Suivant l'invention, la surface libre 4 de la nappe textile tuftée 1, c'est à dire la surface sur laquelle la couche de matériau thermoformable 9 n'est pas associée, comprend des bandes 7 de touffes 3 de masse surfacique différente.

On décrit ci-dessous un procédé de réalisation d'un tel flan 10.

La nappe de textile 1 est tuftée au moyen d'une machine à tufter de type connu. Cette machine comprend notamment un banc d'aiguilles, sur lequel chaque aiguille est alimentée par au moins un fil.

Pour obtenir une nappe textile tuftée 1, une nappe textile 1' est amenée sur la machine à tufter, et est déplacée sous le banc d'aiguilles par des moyens de défilement adéquats.

La nappe textile 1' a été préalablement formée de façon connue, avec des caractéristiques techniques adaptées en fonction de son utilisation finale.

La nappe 1' peut être formée d'une couche de non-tissé, par exemple en polyester.

Le procédé de tuftage de la nappe 1' consiste classiquement en l'action des aiguilles au travers de la nappe textile 1', de sorte à obtenir une rangée 2 de boucles de fil 3 disposées sur une surface 4 de ladite nappe 1', ladite rangée 2 étant perpendiculaire au sens de défilement de la nappe 1', et le défilement de la nappe 1' permettant d'obtenir des boucles 3 sur la surface 4 de la nappe 1' à tufter.

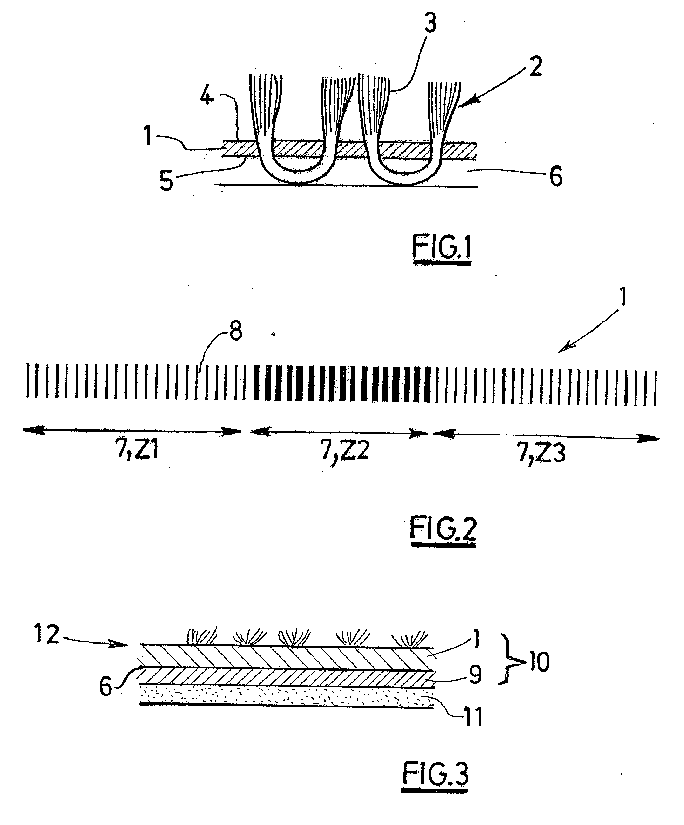

Pour améliorer l'aspect de la surface 4 pourvue de boucles de la nappe textile 1', les boucles 3 situées sur ladite surface sont ensuite coupées de sorte à obtenir des touffes 3 qui donne à la surface 4 de la nappe 1' un aspect velours, tel que représenté sur la figure 1. On obtient ainsi une nappe textile tuftée 1.

L'autre surface 5 de la nappe textile 1 est généralement enduite avec une couche de liant 6, par exemple formée de latex, destinée à améliorer la tenue des touffes sur la surface 4.

Le procédé permet d'obtenir une nappe textile tuftée 1 pourvue de zones présentant des masses surfaciques de touffes 3 différentes.

A cet effet, on alimente les aiguilles avec des fils dont le titre est choisi en fonction de la position sur la nappe 1 des touffes 3 à former, par rapport à la zone considérée.

Selon une réalisation, les fils sont formés de fibres continues, le titre des fils utilisés étant typiquement compris entre 700 décitex et 2100 décitex.

Selon une autre réalisation, les fils sont formés de fibres discontinues, le numéro métrique des fils étant typiquement compris entre 3 et 15 Nm.

Les fils sont par exemple formés de polyamide, ou d'un mélange polyamide-polyester.

Les fibres constituant les fils peuvent être de titre constant, par exemple égal à 10 décitex. Les différents titres de fil sont alors obtenus en faisant varier la quantité de fibres par fil.

On peut également envisager d'alimenter chaque aiguille par plus d'un fil, les fils alimentant la même aiguille étant de titre identique ou différent, de sorte à obtenir le titre global du fil requis pour l'aiguille considérée.

Selon le mode de réalisation représenté sur la figure 2, les différentes zones de la nappe 1 sont formées de bandes 7 s'étendant dans le sens de défilement de la nappe 1, chaque bande 7 présentant une masse surfacique de touffes 3 différente de celle de la bande adjacente.

Les zones Z1 et Z3 comprenant une bande 7 de masse surfacique égale à 200g/m², sont disposées de part et d'autre d'une zone Z2 comprenant une bande 7 de masse surfacique égale à 350 g/m², les bandes des zones Z1 et Z3 étant obtenues avec des fils de titre 900 décitex et la bande de la zone Z2 étant obtenue avec un fil de titre 1750 décitex, lesdites bandes étant formées de plusieurs colonnes 8 de touffes 3, chaque colonne 8 étant obtenue au moyen d'une aiguille.

Pour obtenir le flan thermoformable 10, la couche de matériau thermoformable 9 est ensuite disposée sur la surface 5 de la nappe textile tuftée 1 puis associée à elle par tous moyens adéquats.

Dans le cadre de son utilisation à l'intérieur d'un habitacle de véhicule automobile, le flan thermoformable 10 doit pouvoir, pour obtenir un tapis, être mise en forme, notamment par thermoformage, sans que cette mise en forme, qui implique des étirements de la nappe 1 plus ou moins importants, ne nuise à l'aspect de la pièce finie.

Cette contrainte est satisfaite grâce à l'augmentation de la masse surfacique de certaines bandes de touffes de la nappe textile tuftée 1, avant le thermoformage du flan 10, les zones de la nappe qui subissent un étirement important présentent, après thermoformage, un aspect tufté uniforme et esthétiquement satisfaisant.

En particulier, la masse surfacique des touffes 3 situées sur les zones destinées à être fortement étirées est prévue pour que ces zones présentent un aspect tufté analogue à celui des zones non étirées, ou faiblement étirées. Ainsi, après thermoformage, on obtient un tapis d'aspect uniforme.

Le flan 10, une fois thermoformé, peut être associé à un support 11 par exemple en mousse ou en feutre afin de réaliser un tapis d'habitacle de véhicule automobile 12 possédant à la fois une fonction esthétique et une fonction d'isolation acoustique.

L'association des différentes couches formant un tel tapis 12 est représentée de façon schématique sur la figure 3. Le tapis 12 comprend successivement, de bas en haut, un support 11, une couche de matériau thermoformable 9, une couche de liant 6 de type latex et une nappe textile tuftée 1.

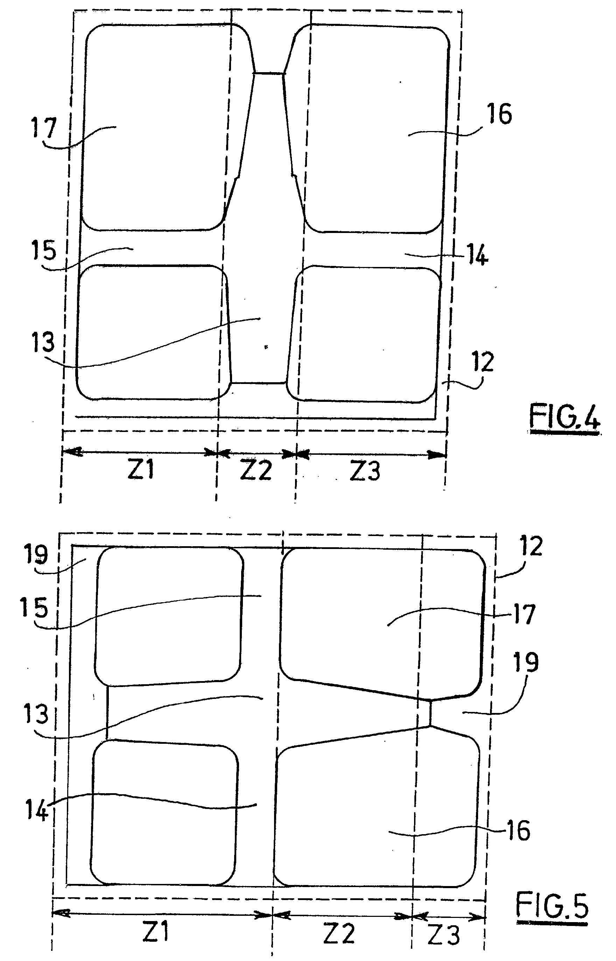

Selon le mode de disposition représenté sur la figure 4, la nappe textile tuftée 1 formant le tapis d'habitacle de véhicule automobile 12 est conçue pour améliorer l'aspect esthétique de la zone destinée à recouvrir le « tunnel » 13 de l'habitacle, qui est fortement étirée.

A cet effet, la zone Z2 du tapis 12, destinée à être disposée sur le tunnel 13, possède des touffes 3 dont la masse surfacique est importante, égale ici à 350g/m² obtenue avec un fil de titre 1750 décitex. Les autres zones Z1 et Z3 du tapis 12, moins étirées, possèdent des touffes 3 dont la masse surfacique est moindre, égale par exemple à 200g/m² avec un fil de titre 900 décitex.

Dans cet exemple, les zones Z1 et Z3 sont de même largeur, égale à la largeur des sous-sièges droit 14 et gauche 15.

La zone Z2 est de largeur inférieure à celle de Z1 et Z3, égale à la largeur de la partie centrale du tunnel 13.

Selon un autre mode de disposition, représenté sur la figure 5, il est possible de former une nappe textile tuftée 1 pour tapis d'habitacle de véhicule automobile 12 de sorte à améliorer l'aspect de la zone destinée à recouvrir les caves à pieds avant droite 16 et gauche 17 du véhicule.

A cet effet, la zone Z2 du tapis 12 destinée à être disposée sur les caves à pieds avant droite 16 et avant gauche 17, possède des touffes 3 dont la masse surfacique est importante, égale ici à 350g/m² obtenue avec un fil de titre 1750 décitex. Les autres zones Z1 et Z3 du tapis 12 possèdent des touffes 3 dont la masse surfacique est moindre, égale par exemple à 200g/m² avec un fil de titre 900 décitex.

Dans cet exemple, la zone Z1 a une largeur égale à la longueur de la moitié arrière 18 de l'habitacle, la zone Z2 est de largeur suffisante pour recouvrir à la fois les caves à pieds avant droite 16 et gauche 17, et la zone Z3 est de largeur suffisante pour recouvrir la partie avant 19 de l'habitacle.

Il est à préciser que les valeurs numériques indiquées à titre d'exemple correspondent à celles obtenues avant mise en forme du flan 10.

Selon l'invention, les tapis d'habitacle de véhicule automobile présentent des zones visibles ayant un aspect très satisfaisant, et ce en minimisant la quantité de fibres utilisées.

## Revendications

1. Flan thermoformable (10) du type comprenant, associées l'une sur l'autre, une nappe textile tuftée (1) et une couche de matériau thermoformable (9), **caractérisé en ce que** la surface libre (4) de la nappe textile tuftée (1) comprend des bandes (7) de touffes (3) de masse surfacique différente.

2. Flan thermoformable (10) selon la revendication 1, **caractérisé en ce que** la couche de matériau thermoformable (9) est chargée avec une charge minérale.

3. Procédé de réalisation d'un flan thermoformable (10) selon la revendication 1 ou 2, **caractérisé en ce qu'**il comprend les étapes prévoyant de :
- former la nappe textile (1') ;
- faire défiler la nappe (1') sous au moins un banc d'aiguilles d'une machine à tufter, chaque aiguille étant alimentée par au moins un fil de sorte à former, sur la surface libre (4) de la nappe (1'), des rangées (2) de touffes (3) qui s'étendent perpendiculairement au sens de défilement de la nappe (1'), les aiguilles étant alimentées avec des fils de titre différent en fonction de la position sur la nappe (1') des touffes (3) formées, de sorte à obtenir, dans le sens de défilement de la nappe, les bandes (7) de touffes (3) de masse surfacique différente ;
- enduire la surface (5) de la nappe (1') dépourvue de touffes (3) avec une couche de liant (6) ;
- associer la couche thermoformable (9) et la nappe textile tuftée (1).

4. Procédé selon la revendication 3, **caractérisé en ce qu'**un ou plusieurs fils de même titre alimente un groupe d'aiguilles adjacentes, le ou les fils alimentant les groupes d'aiguilles adjacents audit groupe ayant un titre différent.

5. Procédé selon la revendication 3 ou 4, **caractérisé en ce que** les fils sont formés de fibres continues, le titre des fils étant compris entre 700 et 2100 décitex.

6. Procédé selon la revendication 3 ou 4, **caractérisé en ce que** les fils sont formés de fibres discontinues, le numéro métrique des fils étant compris entre 3 et 15 Nm.

7. Procédé selon l'une quelconque des revendications 3 à 6, **caractérisé en ce que** les fils sont formés de fibres de titre constant, les différents titres de fil étant obtenus en associant le nombre de fibres requis pour obtenir ledit titre.

8. Tapis d'habitacle de véhicule automobile (12), **caractérisé en ce qu'**il comprend un flan thermoformable (10) selon la revendication 1 ou 2, ledit flan (10) ayant été thermoformé.

9. Tapis (12) selon la revendication 8, **caractérisé en ce qu'**il comprend en outre, associé au flan (10), un support (11) par exemple en mousse ou en feutre.
